(19) **Europäisches Patentamt / European Patent Office / Office européen des brevets**

(11) **EP 4 525 353 A1**

(12) **DEMANDE DE BREVET EUROPEEN**

(43) Date de publication:
**19.03.2025 Bulletin 2025/12**

(21) Numéro de dépôt: **24190159.4**

(22) Date de dépôt: **22.07.2024**

(51) Classification Internationale des Brevets (IPC):
**H04L 9/30** $^{(2006.01)}$ **H04L 9/00** $^{(2022.01)}$

(52) Classification Coopérative des Brevets (CPC):
**H04L 9/3093; H04L 9/003;** H04L 2209/046

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **14.09.2023 FR 2309678**

(71) Demandeur: **Idemia France**
**92400 Courbevoie (FR)**

(72) Inventeurs:
• **BETTALE, Luk**
  **92400 COURBEVOIE (FR)**
• **TRANNOY, Matthias**
  **92400 COURBEVOIE (FR)**

(74) Mandataire: **Idemia**
**2, place Samuel de Champlain**
**92400 Courbevoie (FR)**

(54) **PROCÉDÉ DE MULTIPLICATION SÉCURISÉE ENTRE UN POLYNÔME CREUX ET UN POLYNÔME DENSE DANS UN ALGORITHME CRYPTOGRAPHIQUE, DISPOSITIF ÉLECTRONIQUE ET PROGRAMME D' ORDINATEUR ASSOCIÉS**

(57) Procédé de multiplication sécurisée dans $K[X]/\langle X^n - c \rangle$ entre un polynôme creux $f$ et un polynôme dense $g$ de la forme $\sum_{k=0}^{d} g^{(k)}$ où $g^{(k)}$ est tel que $g^{(k)} = \sum_{i=0}^{n-1} \left( g_i^{(k)} \cdot X^i \right)$, - caractérisé en ce que $f$ est de la forme $\sum_{i=0}^{w} \left( f_{s_i} \cdot X^{s_i} \right)$ où $s_i$ est compris entre 0 et $n$ - 1 tel que $s_i = \sum_{j=0}^{q} s_i^{(j)} \bmod n$, et $f_{s_i}$ est un coefficient tel que $f_{s_i} \cdot X^{s_i} = \prod_{j=0}^{q} \left( f_{s_i}^{(j)} \cdot X^{s_i^{(j)}} \right)$,
- et en ce qu'il comprend pour tout $k$ allant de 0 à $d$:
a. l'initialisation (E4) d'un polynôme résultat intermédiaire $t^{(k)}$;
b. l'initialisation (E12) de $w + 1$ autres polynômes intermédiaires $u^{(k,0)}, \dots, u^{(k,w)}$ tel que pour tout $i$ allant de 0 à $w$, $u^{(k,i)} = g^{(k)} \cdot f_{s_i}^{(0)} \cdot X^{s_i^{(0)}}$;
c. $q$ étapes (E22) de multiplication polynomiale effectuant pour tout $i$ allant de 0 à $w$, $u^{(k,i)} = u^{(k,i)} \cdot f_{s_i}^{(j)} \cdot X^{s_i^{(j)}}$, $j$ ayant pour valeur l'indice de l'étape concernée ;
d. la mise à jour (E34) de $t^{(k)}$ en lui ajoutant les $w + 1$ autres polynômes intermédiaires.

Figure 2

EP 4 525 353 A1

**Description**

L'invention concerne le domaine de la cryptographie informatique. Elle concerne plus particulièrement un procédé de multiplication sécurisée entre un polynôme creux et un polynôme dense dans un algorithme cryptographique. L'invention concerne également un dispositif électronique et un programme d'ordinateur associés.

De façon connue, un algorithme cryptographique peut être utilisé pour chiffrer, déchiffrer, signer ou vérifier la signature d'une donnée. Un tel algorithme cryptographique est par exemple un algorithme cryptographique à clés asymétriques mis en oeuvre par un dispositif électronique, typiquement un algorithme RSA ou un algorithme à courbe elliptique mis en oeuvre par la puce d'une carte à puce.

Cependant, l'émergence de calculateurs quantiques rend ces algorithmes cryptographiques non sûrs. Il est donc souhaitable d'utiliser des algorithmes cryptographiques adaptés pour garantir la sécurité face à un attaquant disposant d'un calculateur quantique.

Ces algorithmes sont dénommés algorithmes cryptographiques post-quantiques.

Certains algorithmes cryptographiques post-quantiques à base de polynômes ont été proposés au cours d'une compétition organisée par le NIST (« National Institute of Standards and Technology » ou Institut national des normes et de la technologie), notamment des algorithmes de schémas de chiffrement à clé publique.

Il est nécessaire de protéger l'implémentation de ces algorithmes cryptographiques post-quantiques à base de polynômes contre les attaques par canaux cachés, aussi connues sous le nom d'attaques par canaux auxiliaires.

Mais les solutions actuelles reposent sur des manipulations de polynômes qui sollicitent trop le dispositif électronique.

Pour remédier à cet inconvénient, la présente invention propose selon un premier aspect, un procédé de multiplication sécurisée entre un polynôme creux *f* et un polynôme dense *g* dans un anneau quotient formé en divisant un anneau des polynômes à une indéterminée *X* et à coefficients dans un corps fini *K,* par l'idéal engendré par un polynôme $X^n$ - *c* où *n* et *c* sont des entiers naturels non nuls,

- le procédé étant mis en oeuvre dans un algorithme cryptographique par un dispositif électronique,

- le polynôme dense *g* étant de la forme $\sum_{k=0}^{d} g^{(k)}$ où *d* est un entier naturel non nul et pour tout *k* allant de 0 à *d, $g^{(k)}$* est un polynôme intermédiaire de masquage d'indice *k* tel que

$$g^{(k)} = \sum_{i=0}^{n-1} \left( g_i^{(k)} \cdot X^i \right)$$

avec pour tout *i* allant de 0 à *n* - 1, $g_i^{(k)}$ un coefficient de rang *i* du polynôme intermédiaire de masquage d'indice *k,*

- le procédé étant caractérisé en ce que le polynôme creux *f* est de la forme $\sum_{i=0}^{w} \left( f_{s_i} \cdot X^{s_i} \right)$ où pour tout i allant de 0 à *w, $s_i$* est entier compris entre 0 et *n* - 1 tel que $s_i = \sum_{j=0}^{q} s_i^{(j)} \bmod n$ , et $f_{s_i}$ est un coefficient non nul de rang $s_i$ tel que

$$f_{s_i} \cdot X^{s_i} = \prod_{j=0}^{q} \left( f_{s_i}^{(j)} \cdot X^{s_i^{(j)}} \right)$$

, avec w un entier naturel non nul strictement inférieur à *n, q* un entier naturel non nul, et pour tout *j* allant de 0 à *q,* $s_i^{(j)}$ une partie additive d'indice *j* du rang $s_i$ et

$f_{s_i}^{(j)}$ une partie multiplicative du coefficient $f_{s_i}$,

- et en ce que le procédé comprend pour tout k allant de 0 à *d:*

   a. l'initialisation d'un polynôme résultat intermédiaire d'indice *k* *$t^{(k)}$* tel que

$$t^{(k)} = \sum_{i=0}^{n-1} \left( t_i^{(k)} \cdot X^i \right)$$

avec pour tout *i* allant de 0 à *n* - 1, $t_i^{(k)}$ un coefficient de rang *i* du polynôme résultat intermédiaire d'indice *k* ;
   b. l'initialisation de w + 1 autres polynômes intermédiaires ayant des doubles indices respectifs allant de *k*, 0 à *k, w* tel que pour tout *i* allant de 0 à w, $u^{(k,i)} = g^{(k)} \cdot f_{s_i}^{(0)} \cdot X^{s_i^{(0)}}$ , avec $u^{(k,i)}$ l'autre polynôme intermédiaire ayant pour double indice *k, i;*
   c. la mise en oeuvre de *q* étapes de multiplication polynomiale ayant des indices respectifs allant de 1 à *q,* chaque étape de multiplication polynomiale effectuant un calcul défini comme suit : pour tout *i* allant de 0 à w,

$$u^{(k,i)} = u^{(k,i)} \cdot f_{s_i}^{(j)} \cdot X^{s_i^{(j)}}$$

, *j* ayant pour

valeur l'indice de l'étape concernée ;
   d. la mise à jour du polynôme résultat intermédiaire d'indice *k* en ajoutant audit polynôme résultat intermédiaire d'indice k, les w + 1 autres polynômes intermédiaires ayant des doubles indices respectifs allant de *k*, 0 à *k, w.*

D'autres caractéristiques avantageuses et non limitatives du procédé conforme à l'invention, prises individuellement ou selon toutes les combinaisons techniquement possibles, sont les suivantes :

- le procédé comprend en outre une étape de renouvellement entre deux étapes de multiplication polynomiale ayant des indices différents, chaque étape de renouvellement renouvelant les autres polynômes intermédiaires tel que pour tout *i* allant de 0 à w,

$$\sum_{k=0}^{d} u^{(k,i)}$$ reste inchangé ;

- *c* a pour valeur 1 et pour chaque coefficient non nul du polynôme creux, au plus une partie multiplicative du coefficient non nul concerné a une valeur différente de 1, ou *c* est un entier naturel strictement supérieur à 1 et pour chaque coefficient non nul du polynôme creux, au moins une partie multiplicative du coefficient non nul concerné est générée aléatoirement ou pseudo-aléatoirement ;

- l'algorithme cryptographique est un algorithme d'un schéma de chiffrement à clé publique post-quantique, par exemple un algorithme parmi l'algorithme Hamming Quasi-Cyclic, l'algorithme Bit Flipping Key Encapsulation, et l'algorithme Number Theory Research Unit ;

- pour tout k allant de 0 à *d,* l'initialisation du polynôme résultat intermédiaire d'indice k comprend l'initialisation de tous les coefficients dudit polynôme résultat intermédiaire d'indice k tel que, pour tout *i* allant de 0 à n - 1, $$\sum_{k=0}^{d} t_i^{(k)} = 0$$ ;

- le procédé comprend après la mise en oeuvre des *d* + 1 étapes de mise à jour d'un polynôme résultat intermédiaire, une étape de calcul d'un polynôme résultat final *t* comme suit : $$t = \sum_{k=0}^{d} t^{(k)}$$ ;

- pour tout *k* allant de 0 à *d,* l'initialisation du polynôme résultat intermédiaire d'indice *k* comprend l'initialisation de tous les coefficients dudit polynôme résultat intermédiaire d'indice *k,* et le calcul d'un polynôme de référence r comme suit : $$r = \sum_{k=0}^{d} t^{(k)}$$, avec pour tout k allant de 0 à *d,* $t^{(k)}$ le polynôme résultat intermédiaire d'indice *k* tel qu'initialisé pendant l'étape d'initialisation du polynôme résultat intermédiaire d'indice *k,*

- le procédé comprend après la mise en oeuvre des *d* + 1 étapes de mise à jour d'un polynôme résultat intermédiaire, une étape de calcul d'un polynôme résultat final *t* comme suit : $$t = \left( \sum_{k=0}^{d} t^{(k)} \right) - r.$$

Selon un deuxième aspect, l'invention propose un programme d'ordinateur comprenant des instructions exécutables par un processeur et adaptées à mettre en oeuvre un procédé de multiplication sécurisée tel que défini précédemment, lorsque ces instructions sont exécutées par le processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Au moins une partie des procédés selon l'invention peut être mise en oeuvre par ordinateur. En conséquence, la présente invention peut prendre la forme d'un mode de réalisation entièrement matériel, d'un mode de réalisation entièrement logiciel (comportant les microprogrammes, les logiciels résidents, les microcodes, etc.) ou d'un mode de réalisation combinant des aspects logiciels et matériels qui peuvent tous être globalement appelés ici "module".

Selon un troisième aspect, l'invention propose un dispositif électronique de multiplication sécurisée entre un polynôme creux *f* et un polynôme dense *g* dans un anneau quotient formé en divisant un anneau des polynômes à une indéterminée *X* et à coefficients dans un corps fini *K,* par l'idéal engendré par un polynôme $X^n$ - *c* où *n* et *c* sont des entiers naturels non nuls,

- le polynôme dense *g* étant de la forme $$\sum_{k=0}^{d} g^{(k)}$$ où *d* est un entier naturel non nul et pour tout *k* allant de 0 à *d,* $g^{(k)}$ est un polynôme intermédiaire de masquage d'indice *k* tel que $$g^{(k)} = \sum_{i=0}^{n-1} \left( g_i^{(k)} \cdot X^i \right)$$ avec pour tout *i* allant de 0 à *n* - 1, $g_i^{(k)}$ un coefficient de rang *i* du polynôme intermédiaire de masquage d'indice *k,*

- le dispositif électronique étant caractérisé en ce que le polynôme creux *f* est de la forme $$\sum_{i=0}^{w} \left( f_{s_i} \cdot X^{s_i} \right)$$ où pour tout i allant de 0 à w, $s_i$ est un entier compris entre 0 et *n* - 1 tel que $s_i = \sum_{j=0}^{q} s_i^{(j)} \bmod n$, et $f_{s_i}$ est un coefficient non nul de rang $s_i$ tel que $$f_{s_i} \cdot X^{s_i} = \prod_{j=0}^{q} \left( f_{s_i}^{(j)} \cdot X^{s_i^{(j)}} \right)$$, avec w un entier naturel non nul strictement inférieur à *n,* q un entier naturel non nul, et pour tout *j* allant de 0 à q, $s_i^{(j)}$ une partie additives d'indice *j* du rang $s_i$ et $f_{s_i}^{(j)}$ une partie multiplicative du coefficient $f_{s_i}$,

- et en ce que le dispositif électronique comprend, pour tout *k* allant de 0 à *d* :

    a. un module d'initialisation d'un polynôme résultat intermédiaire d'indice *k* $t^{(k)}$ configuré pour initialiser le polynôme résultat intermédiaire d'indice $k$ tel que
$$t^{(k)} = \sum_{i=0}^{n-1} \left( t_i^{(k)} \cdot X^i \right)$$

avec pour tout $i$ allant de 0 à $n$ - 1, $t_i^{(k)}$ un coefficient de rang $i$ du polynôme résultat intermédiaire d'indice $k$ ;

b. un module d'initialisation de $w$ + 1 autres polynômes intermédiaires configuré pour initialiser $w$ + 1 autres polynômes intermédiaires ayant des doubles indices respectifs allant de $k$, 0 à $k$, $w$ tel que pour tout $i$ allant de 0 à $w$,
$$u^{(k,i)} = g^{(k)} \cdot f_{s_i}^{(0)} \cdot X^{s_i^{(0)}}$$
, avec $u^{(k,i)}$ l'autre polynôme intermédiaire ayant pour double indice $k, i$;

c. un module de multiplication polynomiale configuré pour mettre en oeuvre $q$ étapes de multiplication polynomiale ayant des indices respectifs allant de 1 à $q$, chaque étape de multiplication polynomiale effectuant un calcul défini comme suit : pour tout $i$ allant de 0 à w,
$$u^{(k,i)} = u^{(k,i)} \cdot f_{s_i}^{(j)} \cdot X^{s_i^{(j)}}$$
, $j$ ayant pour valeur l'indice de l'étape concernée ;

d. un module de mise à jour du polynôme résultat intermédiaire d'indice $k$ configuré pour mettre à jour le polynôme résultat intermédiaire d'indice $k$ en ajoutant audit polynôme résultat intermédiaire d'indice $k$, les $w$ + 1 autres polynômes intermédiaires ayant des doubles indices respectifs allant de $k$, 0 à $k$, w.

Ce dispositif électronique peut être configuré pour la mise en oeuvre de chacune des possibilités de réalisation envisagées pour le procédé de multiplication sécurisée tel que défini précédemment. Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

D'autres caractéristiques et avantages de la présente invention ressortiront de la description faite ci-dessous, en référence aux figures annexées qui en illustrent des exemples de réalisation dépourvus de tout caractère limitatif.

Sur les figures:

Figure 1 représente schématiquement un mode de réalisation préféré d'un dispositif électronique pour la mise en oeuvre d'un procédé selon l'invention ;

Figure 2 illustre sous forme de logigramme les étapes principales d'un procédé de multiplication sécurisée selon l'invention ;

Figure 3 illustre sous forme de logigramme les étapes principales d'un autre procédé de multiplication sécurisée selon l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

Dans le cadre de la présente description, des qualificatifs « premier », « deuxième », « troisième », « quatrième » et « cinquième » ne sont qu'à titre indicatif pour distinguer des éléments qu'ils qualifient, mais n'impliquent pas d'ordre entre eux.

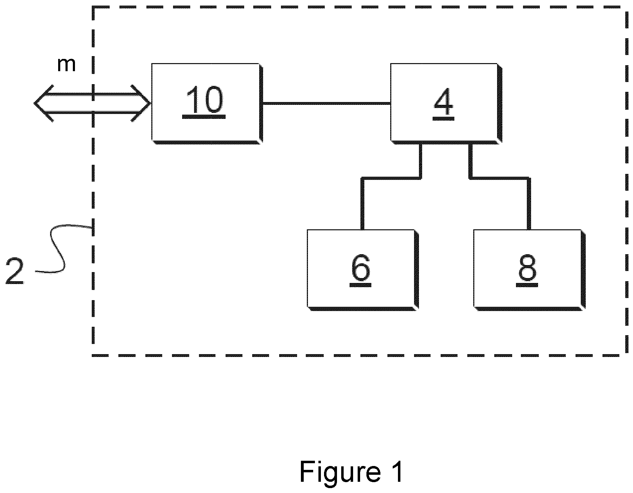

La figure 1 représente schématiquement un dispositif électronique 2 comprenant un processeur 4 (par exemple un microprocesseur), un bloc de mémorisation 6, une mémoire vive 8 et un bloc de communication 10.

La mémoire vive 8 et le bloc de mémorisation 6 sont chacun liés au processeur 4 de sorte que le processeur 4 peut lire ou écrire des données dans le bloc de mémorisation 6 et/ou la mémoire vive 8.

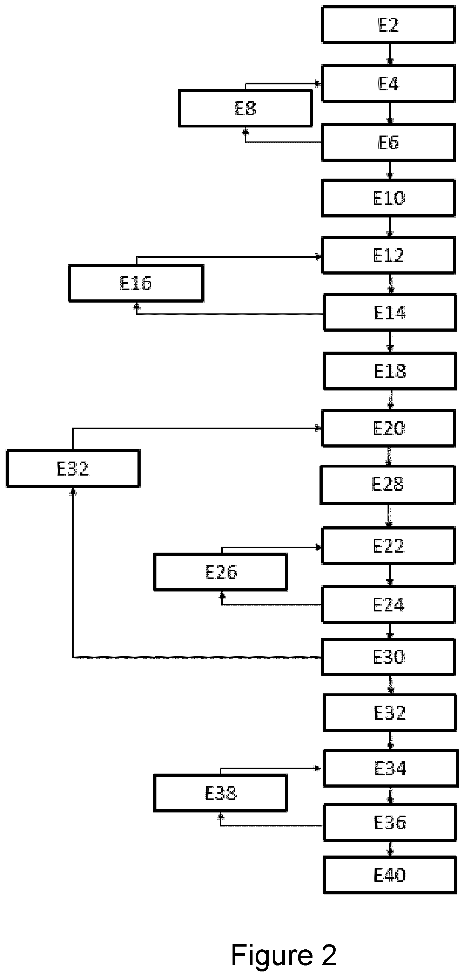

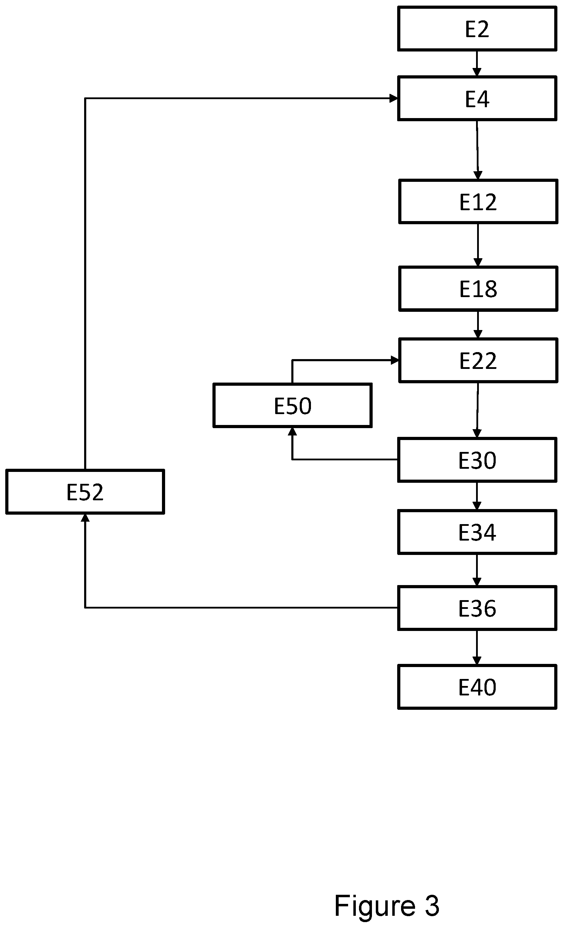

Le bloc de mémorisation 6 mémorise des instructions de programme d'ordinateur, dont certaines sont conçues pour mettre en oeuvre un procédé de multiplication sécurisée tel que décrit en référence à la figure 2 ou à la figure 3, lorsque ces instructions sont exécutées par le processeur 4.

Le bloc de mémorisation 6 est par exemple un disque dur ou une mémoire non-volatile, éventuellement réinscriptible, par exemple de type EEPROM (pour "Electrically Erasable and Programmable Read-Only Memory" selon l'appellation anglo-saxonne couramment utilisée).

La mémoire vive 8 peut quant à elle mémoriser certains au moins des éléments (notamment des polynômes résultat intermédiaire et/ou des autres polynômes intermédiaires tel que décrits en référence à la figure 2 ou à la figure 3) manipulés lors des différents traitements effectués au cours d'un des procédés décrits ci-après.

On appelle mémoire dans la suite de la description, l'un quelconque parmi le bloc de mémorisation 6 et la mémoire vive 8.

Le dispositif électronique 2 comporte également plusieurs modules (non représentés). Typiquement, le dispositif électronique 2 comporte pour tout $k$ allant de 0 à $d$, avec $d$ est un entier naturel non nul, un module d'initialisation d'un polynôme résultat intermédiaire d'indice $k$, un module d'initialisation de $w$ + 1 autres polynômes intermédiaires, avec $w$ un entier naturel non nul strictement inférieur à $n$ et $n$ un entier naturel non nul, un module de multiplication polynomiale et un module de mise à jour du polynôme résultat intermédiaire d'indice $k$.

Le dispositif électronique 2 peut comporter en outre un module de renouvellement et/ou un module de calcul d'un polynôme résultat final.

Ces modules peuvent en pratique être réalisés par une combinaison d'éléments matériels et d'éléments logiciels.

Chaque module possède une fonctionnalité décrite dans le procédé conforme à l'invention et décrit ci-après en référence à la figure 2 ou à la figure 3. Ainsi, pour chaque module, le dispositif électronique 2 mémorise par exemple des instructions de logiciel exécutables par le processeur 4 du dispositif électronique 2 afin d'utiliser un élément matériel (par exemple une interface de communication ou une mémoire) et de mettre ainsi en oeuvre la fonctionnalité offerte par le module.

Selon une possibilité de réalisation, les instructions de programme d'ordinateur mémorisées dans le bloc de mémorisation 6 ont par exemple été reçues (typiquement d'un ordinateur distant) lors d'une phase de fonctionnement du dispositif électronique 2 antérieure au procédé décrit en référence à la figure 2 ou à la figure 3.

Le bloc de communication 10 est relié au processeur 4 de manière à permettre au processeur 4 de recevoir des données en provenance d'un autre dispositif électronique (non représenté) et/ou d'émettre des données à destination d'un autre dispositif électronique (non représenté). Dans certains modes de réalisation, le processeur 4 peut ainsi recevoir une donnée m de l'autre dispositif électronique et /ou émettre d'autres données, par exemple les instructions de programme d'ordinateur.

Le dispositif électronique 2 peut prendre de nombreuses formes (non représentées).

Selon un premier exemple, le dispositif électronique est une carte à puce, telle qu'une carte d'identité, une carte bancaire ou une carte à circuit intégré universelle (également connue sous le nom de carte UICC pour « Universal Integrated Circuit Card » en terminologie anglo-saxonne).

Selon un deuxième exemple, le dispositif électronique est un élément sécurisé, tel qu'un microcontrôleur sécurisé qui est intégré à un autre dispositif électronique, typiquement un terminal de communication ou une voiture.

Selon d'autres exemples, le dispositif électronique est une clé usb, ou un document d'identité, tel qu'un passeport électronique.

La figure 2 illustre sous forme de logigramme les étapes principales d'un procédé de multiplication sécurisée selon l'invention.

Plus précisément, le procédé de la figure 2 vise à mettre en oeuvre une multiplication sécurisée entre un polynôme creux $f$ et un polynôme dense $g$ dans un anneau quotient formé en divisant un anneau des polynômes à une indéterminée $X$ et à coefficients dans un corps fini $K$, par l'idéal engendré par un polynôme $X^n - c$ où $n$ et $c$ sont des entiers naturels non nuls.

$K$ représente un corps fini, c'est-à-dire un ensemble muni de quatre opérations : l'addition, la soustraction, la multiplication et la division. Un exemple courant de corps finis est les entiers modulo un nombre premier. L'anneau des polynômes à une indéterminée $X$ et à coefficients dans un corps fini $K$ est désigné $K[X]$. Il se compose de tous les polynômes avec des coefficients appartenant au corps fini $K$. Les éléments, c'est-à-dire les polynômes, de $K[X]$ sont des expressions de la forme $a_0 + a_1X \square \ldots + a_{m-1}X^{m-1} + a_mX^m,$ où m est un entier naturel non nul et pour tout entier i compris entre 0 et $m$, $a_i$ appartient au corps fini $K$.

L'idéal engendré par le polynôme $X^n - c$ dans l'anneau de polynômes $K[X]$ est désigné $\langle X^n - c \rangle$. L'idéal $\langle X^n - c \rangle$ est l'ensemble de tous les polynômes de $K[X]$ qui peuvent être obtenus en multipliant $X^n - c$ par n'importe quel polynôme de $K[X]$.

$K[X]/\langle X^n - c \rangle$ représente l'anneau quotient obtenu en divisant l'anneau polynomial $K[X]$ par l'idéal $\langle X^n - c \rangle$. En d'autres termes, l'anneau quotient $K[X]/\langle X^n - c \rangle$ est l'ensemble de toutes les classes d'équivalence de polynômes dans $K[X]$, où deux polynômes sont considérés comme équivalents si leur différence se situe dans l'idéal $\langle X^n - c \rangle$.

L'anneau quotient $K[X]/\langle X^n - c \rangle$ représente donc l'anneau de polynômes modulo le polynôme $X^n - c$.

Un polynôme creux est un polynôme contenant très peu de monômes non nuls. Par exemple, dans l'algorithme cryptographique HQC (pour Hamming Quasi-Cyclic), un polynôme creux a 66 monômes non nuls quand $n$ vaut 17669, 100 monômes non nuls quand $n$ vaut 35851, ou 131 monômes non nuls quand $n$ vaut 57637.

Un polynôme dense est un polynôme qui n'est pas creux ou un polynôme contenant un nombre indéterminé de monômes non nul.

Un polynôme peut être représenté par un vecteur, aussi dénommée représentation dense, dont chaque composante correspond à un coefficient dudit polynôme. Typiquement, un polynôme $a$ appartenant à l'anneau quotient $K[X]/\langle X^n - c \rangle$, est de la forme $a_0 + a_1X \square \ldots + a_{n-1}X^{n-1}$, et peut être représenté par un vecteur $(a_i)_{0 \leq i \leq n-1}$.

Le polynôme $a$ est composé de monômes $a_iX^i$, avec pour tout $i$ allant de 0 à $n - 1$, $a_i$ un coefficient de rang $i$, le coefficient de rang $i$ étant associé à l'indéterminée $X$ puissance $i$ du polynôme. Un polynôme creux peut avantageusement être représenté par une liste de couples, aussi dénommée représentation creuse, chaque couple étant composé d'un coefficient et d'une puissance, ladite puissance étant le degré du monôme du polynôme creux, associé au coefficient.

Le polynôme dense $g$ est de la forme $\sum_{k=0}^{d} g^{(k)}$ où d est un entier naturel non nul et pour tout $k$ allant de 0 à d, $g^{(k)}$ est un polynôme intermédiaire de masquage d'indice $k$ tel que $g^{(k)} = \sum_{i=0}^{n-1} \left( g_i^{(k)} \cdot X^i \right)$ avec pour tout $i$ allant de 0 à $n - 1$, $g_i^{(k)}$ un coefficient de rang $i$ du polynôme intermédiaire de masquage d'indice $k$.

Le polynôme creux $f$ est de la forme $\sum_{i=0}^{w}\left(f_{s_i} \cdot X^{s_i}\right)$ où pour tout i allant de 0 à $w$, $s_i$ est un entier compris entre 0 et $n$ - 1 tel que $s_i = \sum_{j=0}^{q} s_i^{(j)} \bmod n$ , et $f_{s_i}$ est un coefficient non nul de rang $s_i$ tel que $f_{s_i} \cdot X^{s_i} = \prod_{j=0}^{q}\left(f_{s_i}^{(j)} \cdot X^{s_i^{(j)}}\right)$ , avec w un entier naturel non nul strictement inférieur à $n$, q un entier naturel non nul, et pour tout $j$ allant de 0 à q, $s_i^{(j)}$ une partie additive d'indice $j$ du rang $s_i$ et $f_{s_i}^{(j)}$ une partie multiplicative du coefficient $f_{s_i}$.

Le procédé est mis en oeuvre dans un algorithme cryptographique par un dispositif électronique, typiquement le dispositif électronique 2 décrit en référence à la figure 1.

L'algorithme cryptographique peut être un algorithme d'un schéma de chiffrement à clé publique postquantique, par exemple un algorithme parmi l'algorithme Hamming Quasi-Cyclic, l'algorithme Bit Flipping Key Encapsulation, et l'algorithme Number Theory Research Unit.

Le procédé permet ainsi l'implémentation de ces algorithmes dans un dispositif ayant des ressources mémoires et calculatoires limitées, typiquement dans un élément sécurisé.

Ce procédé est mis en oeuvre dans l'anneau quotient. Ainsi le résultat de chaque opération polynomiale mise en oeuvre sur un, ou plusieurs, polynôme et/ou monôme, est dans l'anneau quotient.

Ce procédé est ici mis en oeuvre par le dispositif électronique 2 du fait de l'exécution des instructions de programme d'ordinateur mémorisées dans le bloc de mémorisation 6 comme indiqué ci-dessus.

De préférence, $c$ a pour valeur 1 et pour chaque coefficient non nul du polynôme creux $f$, au plus une partie multiplicative du coefficient non nul concerné a une valeur différente de 1, ou $c$ est un entier naturel strictement supérieur à 1 et pour chaque coefficient non nul du polynôme creux $f$, au moins une partie multiplicative du coefficient non nul concerné est générée aléatoirement ou pseudo-aléatoirement.

De préférence, quand $c$ vaut 1 et que les coefficients non nuls du polynôme creux $f$ sont publics, ce qui est le cas quand l'algorithme cryptographique est un algorithme parmi l'algorithme Hamming Quasi-Cyclic, l'algorithme Bit Flipping Key Encapsulation, et l'algorithme Number Theory Research Unit, pour chaque coefficient non nul du polynôme creux $f$, au plus une partie multiplicative du coefficient non nul concerné a une valeur différente de 1.

Le procédé permet ainsi de limiter encore les temps de calcul.

Quand c est en entier naturel strictement supérieur à 1, il est préférable que les coefficients non nuls du polynôme creux $f$ ne soient pas publics pour ne pas obtenir d'information sur la non uniformité des masquages additifs. Dans ce cas, il est nécessaire de masquer chaque coefficient non nul du polynôme creux, et ainsi pour chaque coefficient non nul du polynôme creux, au moins une partie multiplicative du coefficient non nul concerné est générée aléatoirement ou pseudo-aléatoirement. Selon une première étape d'initialisation d'index (étape E2), le processeur 4 initialise un entier $k$ à la valeur 0.

Le procédé comprend alors une étape d'initialisation d'un polynôme résultat intermédiaire (étape E4) pendant laquelle le processeur 4 initialise un polynôme résultat intermédiaire d'indice $k$, $t^{(k)}$, tel que $t^{(k)} = \sum_{i=0}^{n-1}\left(t_i^{(k)} \cdot X^i\right)$ avec pour tout $i$ allant de 0 à $n$ - 1, $t_i^{(k)}$ un coefficient de rang $i$ du polynôme résultat intermédiaire d'indice $k$.

$t^{(k)}$ est un polynôme de l'anneau quotient $K[X]/\langle X^n - c\rangle$ .

L'étape d'initialisation d'un polynôme résultat intermédiaire d'indice $k$ est typiquement mise en oeuvre par le module d'initialisation d'un polynôme résultat intermédiaire d'indice $k$ du dispositif électronique 2.

Le processeur 4 détermine ensuite, à une première étape de test (étape E6), si l'entier $k$ a atteint la valeur $d$.

Dans la négative, l'entier k est incrémenté de 1 dans une première étape d'incrémentation (étape E8) et le procédé boucle à l'étape d'initialisation d'un polynôme résultat intermédiaire (étape E4) pour effectuer un tour suivant.

Au cours du procédé, l'étape d'initialisation d'un polynôme résultat intermédiaire (étape E4) est ainsi exécutée pour tout pour tout $k$ allant de 0 à $d$. Le procédé initialise donc $d$ + 1 polynômes résultat intermédiaire $t^{(0)}$, ..., $t^{(d)}$.

Pendant la mise en oeuvre d'une étape d'initialisation d'un polynôme résultat intermédiaire (étape E4) le processeur 4 initialise un polynôme résultat intermédiaire d'indice k, $t^{(k)}$, tel que $t^{(k)} = \sum_{i=0}^{n-1}\left(t_i^{(k)} \cdot X^i\right)$ avec pour tout $i$ allant de 0 à $n$ - 1, $t_i^{(k)}$ un coefficient de rang $i$ du polynôme résultat intermédiaire d'indice $k$.

Selon un premier exemple d'implémentation, l'initialisation du polynôme résultat intermédiaire d'indice $k$ comprend l'initialisation de tous les coefficients dudit polynôme résultat intermédiaire d'indice $k$ tel que, pour tout $i$ allant de 0 à $n$ - 1, $\sum_{k=0}^{d} t_i^{(k)} = 0$ .

Typiquement, chaque coefficient du polynôme résultat intermédiaire d'indice k est initialisé avec la valeur 0 ou des coefficients du polynôme résultat intermédiaire d'indice k sont initialisés des valeurs non nulles tel que : pour tout $i$ allant de 0 à $n$ - 1, $\sum_{k=0}^{d} t_i^{(k)} = 0$.

Le calcul d'un polynôme résultat final à partir des polynôme résultat intermédiaire (Le calcul du polynôme résultat final sera décrit plus loin avec l'étape E40) s'en retrouve simplifié. Le procédé permet ainsi de limiter encore l'espace mémoire consommé.

Selon un deuxième exemple d'implémentation, la première itération de l'étape d'initialisation du polynôme résultat intermédiaire comprend l'initialisation de tous les coefficients du polynôme résultat intermédiaire d'indice $k$ associé à ladite itération, puis l'initialisation d'un polynôme de référence $r$ comme suit : $r = t^{(k)}$, et chacune des autres itérations de l'étape d'initialisation du polynôme résultat intermédiaire comprend l'initialisation de tous les coefficients du polynôme résultat intermédiaire d'indice $k$ associé à l'itération concernée puis la mise à jour du polynôme de référence $r$ comme suit : $r = r + t^{(k)}$.

Le polynôme de référence $r$ est un polynôme de l'anneau quotient $K[X]/\langle X^n - c\rangle$. L'initialisation des polynôme résultat intermédiaire s'en retrouve simplifié. Le procédé permet ainsi de limiter encore les temps de calcul.

Ainsi, quand l'étape d'initialisation d'un polynôme résultat intermédiaire (étape E4) est selon le premier exemple d'implémentation, pour tout k allant de 0 à $d$, l'initialisation du polynôme résultat intermédiaire d'indice k comprend l'initialisation de tous les coefficients dudit polynôme résultat intermédiaire d'indice k tel que, pour tout $i$ allant de 0 à $n$ - 1, $\sum_{k=0}^{d} t_i^{(k)} = 0$.

Quand l'étape d'initialisation d'un polynôme résultat intermédiaire (étape E4) est selon le deuxième exemple d'implémentation, pour tout $k$ allant de 0 à $d$, l'initialisation (étape E4) du polynôme résultat intermédiaire d'indice $k$ comprend l'initialisation de tous les coefficients dudit polynôme résultat intermédiaire d'indice $k$, et le calcul d'un polynôme de référence $r$ comme suit : $r = \sum_{k=0}^{d} t^{(k)}$, avec pour tout k allant de 0 à $d$, $t^{(k)}$ le polynôme résultat intermédiaire d'indice $k$ tel qu'initialisé pendant l'étape d'initialisation du polynôme résultat intermédiaire d'indice $k$.

Dans l'affirmative à la première étape de test (étape E6), le procédé se poursuit avec une deuxième étape d'initialisation d'index (étape E10), pendant laquelle le processeur 4 réinitialise l'entier $k$ à la valeur 0.

Le procédé comprend alors une étape d'initialisation de $w$ + 1 autres polynômes intermédiaires (étape E12) pendant laquelle le processeur 4 initialise $w$ + 1 autres polynômes intermédiaires ayant des doubles indices respectifs allant de $k$, 0 à $k$, $w$ tel que pour tout $i$

allant de 0 à $w$, $u^{(k,i)} = g^{(k)} \cdot f_{s_i}^{(0)} \cdot X^{s_i^{(0)}}$ avec $u^{(k,i)}$ l'autre polynôme intermédiaire ayant pour double indice $k$, $i$.

Chaque autre polynôme intermédiaire est un polynôme de l'anneau quotient $K[X]/\langle X^n - c\rangle$. L'étape d'initialisation de $w$ + 1 autres polynômes intermédiaires est typiquement mise en oeuvre par le module d'initialisation de $w$ + 1 autres polynômes intermédiaires du dispositif électronique 2.

Le processeur 4 détermine ensuite, à une deuxième étape de test (étape E14), si l'entier $k$ a atteint la valeur $d$.

Dans la négative, l'entier k est incrémenté de 1 dans une deuxième étape d'incrémentation (étape E16) et le procédé boucle à l'étape d'initialisation de $w$ + 1 autres polynômes intermédiaires (étape E12) pour effectuer un tour suivant.

Au cours du procédé, l'étape d'initialisation de $w$ + 1 autres polynômes intermédiaires (étape E12) est ainsi exécutée pour tout pour tout $k$ allant de 0 à $d$. Le procédé initialise ainsi $(d + 1) \times (w + 1)$ autres polynômes intermédiaires $u^{(0,0)}$, ..., $u^{(0,w)}$, $u^{(1,0)}$, ... , $u^{(1,w)}$, ..., $u^{(d,0)}$, ... , $u^{(d,w)}$.

Dans l'affirmative à la deuxième étape de test (étape E14), le procédé se poursuit avec une troisième étape d'initialisation d'index (étape E18), pendant laquelle le processeur 4 réinitialise un entier $j$ à la valeur 1.

Le procédé comprend alors une quatrième étape d'initialisation d'index (étape E20), pendant laquelle le processeur 4 réinitialise l'entier $k$ à la valeur 0.

Le procédé comprend alors une étape de renouvellement (étape E28) pendant laquelle le processeur 4 renouvelle les $(d + 1) \times (w + 1)$ autres polynômes intermédiaires tel que pour tout $i$ allant de 0 à $w$, $\sum_{k=0}^{d} u^{(k,i)}$ reste inchangé.

Pendant cette étape de renouvellement (étape E28), pour tout $i$ allant de 0 à $w$, le processeur 4 modifie la valeur de plusieurs coefficients parmi les coefficients des d +1 autres polynômes intermédiaires $u^{(0,i)}$, ... , $u^{(d,i)}$ tout en s'assurant que $\sum_{k=0}^{d} u^{(k,i)}$ reste inchangé, c'est-à-dire tout en s'assurant que la somme des d +1 autres polynômes intermédiaires $u^{(0,i)}$, ..., $u^{(d,i)}$ reste inchangée.

Pour tout $i$ allant de 0 à $w$, le résultat de la somme des d +1 autres polynômes intermédiaires $u^{(0, i)}$, ... , $u^{(d,i)}$ à l'issue des d +1 étapes d'initialisation de $w$ + 1 autres polynômes intermédiaires (étapes E12), est donc identique au résultat de la somme des d +1 autres polynômes intermédiaires $u^{(0,i)}$ ... $u^{(d,i)}$ à l'issue de l'étape de renouvellement (étape E28). Cependant plusieurs coefficients parmi les coefficients des d +1 autres polynômes intermédiaires $u^{(0,i)}$ ... $u^{(d,i)}$ ont été changés par l'étape de renouvellement (étape E28).

Le procédé comprend alors une étape de multiplication polynomiale (étape E22) d'indice $j$, c'est-à-dire ayant pour indice l'entier $j$, pendant laquelle le processeur 4 effectue un calcul défini comme suit : pour tout $i$ allant de 0 à $w$,

$$u^{(k,i)} = u^{(k,i)} \cdot f_{s_i}^{(j)} \cdot X^{s_i^{(j)}}.$$

L'étape de multiplication polynomiale est typiquement mise en oeuvre par le module de multiplication polynomiale du dispositif électronique 2.

Le processeur 4 détermine ensuite, à une quatrième étape de test (étape E24), si l'entier $k$ a atteint la valeur $d$.

Dans la négative, l'entier $k$ est incrémenté de 1 dans une quatrième étape d'incrémentation (étape E26) et le procédé boucle à l'étape de multiplication polynomiale (étape E22) pour effectuer un tour suivant.

Au cours du procédé, l'étape de multiplication polynomiale (étape E22) d'indice $j$, c'est-à-dire ayant pour indice l'entier $j$, est ainsi exécutée pour tout pour tout $k$ allant de 0 à $d$. Avec les étapes de multiplication polynomiale (étape E22) d'indice $j$, le procédé calcule ainsi pour tout $i$ allant de 0 à $w$ et pour tout $k$ allant de 0 à $d$ :

$$u^{(k,i)} = u^{(k,i)} \cdot f_{s_i}^{(j)} \cdot X^{s_i^{(j)}}.$$

Dans l'affirmative à la quatrième étape de test (étape E24), le processeur 4 détermine ensuite, à une troisième étape de test (étape E30), si l'entier $j$ a atteint la valeur $q$.

Dans la négative, l'entier $j$ est incrémenté de 1 dans une troisième étape d'incrémentation (étape E32) et le procédé boucle à la quatrième étape d'initialisation d'index (étape E20) pour effectuer un tour suivant.

Ainsi, pour tout $k$ allant de 0 à $d$, le procédé met en oeuvre $q$ étapes de multiplication polynomiale (étape E22) ayant des indices respectifs allant de 1 à $q$, chaque étape de multiplication polynomiale effectuant un calcul défini comme suit : pour tout $i$ allant de 0 à $w$,

$$u^{(k,i)} = u^{(k,i)} \cdot f_{s_i}^{(j)} \cdot X^{s_i^{(j)}}, \; j \text{ ayant pour valeur}$$

l'indice de l'étape concernée.

En outre, le procédé comprend ainsi une étape de renouvellement entre deux étapes de multiplication polynomiale ayant des indices différents, chaque étape de renouvellement renouvelant les autres polynômes intermédiaires tel que pour tout $i$ allant de 0 à $w$,

$$\sum_{k=0}^{d} u^{(k,i)} \; u^{(k,i)} \text{ reste inchangé. Pour tout } i \text{ allant}$$

de 0 à $w$, le résultat de la somme des $d$ +1 autres polynômes intermédiaires $u^{(0,i)}$, ..., $u^{(d,i)}$ à l'issue des $d$ + 1 exécutions de l'étape de multiplication polynomiale (étape E22) d'indice $j$, est donc identique au résultat de la somme des $d$ +1 autres polynômes intermédiaires $u^{(0,i)}$ ... $u^{(d,i)}$ à l'issue de l'étape de renouvellement (étape E28) qui suit lesdites $d$ + 1 exécutions de l'étape de multiplication polynomiale (étape E22) d'indice $j$. Cependant plusieurs coefficients parmi les coefficients des $d$ +1 autres polynômes intermédiaires $u^{(0,i)}$ ... $u^{(d,i)}$ ont été changés par l'étape de renouvellement (étape E28).

Dans l'affirmative à la troisième étape de test (étape E30), le procédé poursuit avec une cinquième étape d'initialisation d'index (étape E32), pendant laquelle le processeur 4 réinitialise l'entier $k$ à la valeur 0.

Le procédé comprend alors une étape de mise à jour du polynôme résultat intermédiaire (étape E34) d'indice $k$ pendant laquelle le processeur 4 met à jour le polynôme résultat intermédiaire d'indice $k$ en ajoutant audit polynôme résultat intermédiaire d'indice $k$, les $w$ + 1 autres polynômes intermédiaires ayant des doubles indices respectifs allant de $k$, 0 à $k$, $w$.

Autrement dit, le processeur 4 effectue le calcul suivant :

$$t^{(k)} = \sum_{i=0}^{w} u^{(k,i)}.$$

L'étape de mise à jour du polynôme résultat intermédiaire d'indice $k$ est typiquement mise en oeuvre par le module de mise à jour du polynôme résultat intermédiaire d'indice $k$ du dispositif électronique 2.

Le processeur 4 détermine ensuite, à une cinquième étape de test (étape E36), si l'entier $k$ a atteint la valeur $d$.

Dans la négative, l'entier $k$ est incrémenté de 1 dans une cinquième étape d'incrémentation (étape E38) et le procédé boucle à l'étape de mise à jour du polynôme résultat intermédiaire (étape E34). Ainsi le procédé met en oeuvre $d$ + 1 étapes de mise à jour du polynôme résultat intermédiaire et effectue les calculs suivants :

$$t^{(k)} = \sum_{i=0}^{w} u^{(k,i)}, \text{ pour tout } k \text{ allant de 0 à } d.$$

Dans l'affirmative à la cinquième étape de test (étape E36), le procédé poursuit avec une étape (étape E40) de calcul d'un polynôme résultat final $t$.

Quand l'étape d'initialisation d'un polynôme résultat intermédiaire (étape E4) est selon le premier exemple d'implémentation décrit ci-avant pour cette étape, le processeur 4 calcule, pendant l'étape de calcul d'un polynôme résultat final $t$, le polynôme résultat final $t$ comme suit :

$$t = \sum_{k=0}^{d} t^{(k)}.$$

Ainsi, quand l'étape d'initialisation d'un polynôme résultat intermédiaire (étape E4) est selon le premier exemple d'implémentation décrit ci-avant pour cette étape, le procédé comprend après la mise en oeuvre des $d$ + 1 étapes de mise à jour d'un polynôme résultat intermédiaire (étapes E34), une étape de calcul d'un polynôme résultat final $t$ comme suit :

$$t = \sum_{k=0}^{d} t^{(k)}.$$

Quand l'étape d'initialisation d'un polynôme résultat intermédiaire (étape E4) est selon le deuxième exemple d'implémentation décrit ci-avant pour cette étape, le processeur 4 calcule, pendant l'étape de calcul d'un polynôme résultat final $t$, le polynôme résultat final $t$ comme suit :

$$t = \left( \sum_{k=0}^{d} t^{(k)} \right) - r.$$

Ainsi, quand l'étape d'initialisation d'un polynôme résultat intermédiaire (étape E4) est selon le deuxième exemple d'implémentation décrit ci-avant pour cette étape, le procédé comprend après la mise en oeuvre des $d + 1$ étapes de mise à jour d'un polynôme résultat intermédiaire (étapes E34), une étape de calcul d'un polynôme résultat final $t$ comme suit :

$$t = \left(\sum_{k=0}^{d} t^{(k)}\right) - r$$

.

Le polynôme résultat final $t$ a pour valeur $f \cdot g$.

Le polynôme résultat final $t$ est un polynôme de l'anneau quotient $K[X]/\langle X^n - c\rangle$ .

L'étape de calcul d'un polynôme résultat final $t$ est typiquement mise en oeuvre par le module de calcul d'un polynôme résultat final du dispositif électronique 2.

Le procédé utilise un masquage additif des rangs $s_i$ du polynôme creux $f$. Ce masquage est rendu possible par l'utilisation de l'anneau quotient $K[X]/\langle X^n - c\rangle$.

Le procédé ne met en oeuvre que $(d + 1) \times (q + 1) \times (w + 1) \times n$ multiplications dans le corps fini $K$.

Le procédé est ainsi sécurisé et permet de limiter les temps de calcul et l'espace mémoire consommé.

L'homme du métier comprendra que l'étape de calcul d'un polynôme résultat final $t$ peut- être omise, par exemple quand le résultat de la multiplication du polynôme creux $f$ par le polynôme dense $g$ doit être utilisé dans au moins un autre calcul. En effet, dans ce cas il peut être avantageux d'utiliser les $d + 1$ polynômes résultat intermédiaire pour effectuer l'autre calcul. Les $d + 1$ polynômes résultat intermédiaire constituent des parties additives du résultat de la multiplication du polynôme creux $f$ par le polynôme dense $g$, c'est-à-dire une forme masquée dudit résultat de la multiplication du polynôme creux $f$ par le polynôme dense $g$. L'utilisation du résultat du procédé de multiplication sécurisée entre le polynôme creux $f$ et le polynôme dense $g$, pour l'autre calcul, est ainsi sécurisée.

Quand l'étape (étape E40) de calcul d'un polynôme résultat final $t$ est omise, dans l'affirmative à la cinquième étape de test (étape E36), le procédé prend fin.

L'étape de renouvellement (étape E28) peut être omise.

Cependant, l'étape de renouvellement (étape E28) permet de renforcer la sécurité du procédé quand $d$ a une valeur strictement supérieure à 1. Le procédé est sécurisé contre un attaquant qui pourrait observer jusqu'à $d$ valeurs intermédiaires.

Chaque itération de l'étape de renouvellement empêche un attaquant qui pourrait observer jusqu'à $d$ valeurs intermédiaires, de trouver la valeur d'un coefficient du polynôme creux en combinant des valeurs intermédiaires observées pendant une multiplication polynomiale qui précède l'itération concernée de l'étape de renouvellement et une multiplication polynomiale qui suit ladite itération concernée de l'étape de renouvellement (typiquement pendant la multiplication polynomiale de la dernière itération de l'étape d'initialisation de $w + 1$ autres polynômes intermédiaires et la multiplication polynomiale de la première itération de l'étape de multiplication polynomiale, ou pendant la multiplication polynomiale d'au moins une itération d'une étape de multiplication polynomiale d'indice $j$ et la multiplication polynomiale d'au moins une itération d'une étape de multiplication polynomiale d'indice $j + 1$).

On notera par ailleurs qu'une itération (non représentée) de l'étape de renouvellement (étape E28) peut être mise en oeuvre après la dernière itération de l'étape de multiplication polynomiale (c'est-à-dire après la dernière itération de l'étape de multiplication polynomiale d'indice q dans le procédé décrit ci-avant). La sécurité du procédé est ainsi renforcée, notamment si les $d + 1$ polynômes résultat intermédiaire sont utilisés pour effectuer l'autre calcul.

De préférence, quand $d$ vaut 1, le procédé ne comporte pas d'étape de renouvellement.

En effet, $d$ a pour valeur 1 quand il est considéré qu'un attaquant ne peut observer qu'une valeur intermédiaire. Dans ce cas, l'attaquant ne peut pas combiner une pluralité de valeurs intermédiaires. L'absence d'étape de renouvellement ne dégrade donc pas la sécurité du procédé.

En l'absence d'étape de renouvellement, le dispositif électronique 2 peut mettre en oeuvre ensemble les $d + 1$ itérations :

- d'initialisation d'un polynôme résultat intermédiaire,
- d'initialisation de $w + 1$ autres polynômes intermédiaires,
- de mise en oeuvre de $q$ étapes de multiplication polynomiale, et
- de mise à jour du polynôme résultat intermédiaire,

ce qui permet de limiter encore l'espace mémoire consommé.

Le procédé de multiplication sécurisée décrit en référence à la figure 2 comporte 5 boucles.

Une première boucle est constituée de l'étape d'initialisation d'un polynôme résultat intermédiaire (étape E4), de la première étape de test (étape E6) et de la première étape d'incrémentation (étape E8).

Une deuxième boucle est constituée de l'étape d'initialisation de $w + 1$ autres polynômes intermédiaires (étape E12), de la deuxième étape de test (étape E14) et de la deuxième étape d'incrémentation (étape E16).

Une troisième boucle est constituée de la quatrième étape d'initialisation d'index (étape E20), d'une quatrième boucle, de l'étape de renouvellement (étape E28), de la troisième étape de test (étape E30) et de la troisième étape d'incrémentation (étape E32).

La quatrième boucle est constituée de l'étape de multiplication polynomiale (étape E22), de la quatrième étape de test (étape E24) et de la quatrième étape d'incrémentation (étape E26).

Une cinquième boucle est constituée de l'étape de mise à jour du polynôme résultat intermédiaire (étape E34), de la cinquième étape de test (étape E36) et de la cinquième étape d'incrémentation (étape E38).

Un même entier $k$ est utilisé comme index de tour pour la première boucle, la deuxième boucle, la quatrième boucle et la cinquième boucle. L'homme du métier comprendra qu'il peut utiliser un entier différent en tant qu'index de tour pour chacune de ces boucles.

En outre, pour chaque boucle, le procédé de multiplication sécurisée décrit en référence à la figure 2, exécute les tours de la boucle concernée avec un index qui s'incrémente à chaque tour de ladite boucle. L'homme du métier comprendra que l'index d'une boucle peut être géré différemment tant que toutes les valeurs de l'index sont parcourues en exécutant les tours de ladite boucle. Typiquement, concernant la première boucle, le procédé peut être adapté pour faire les $d + 1$ itérations de l'étape d'initialisation d'un polynôme résultat intermédiaire (étape E4) dans un ordre différent, chaque itération utilisant une valeur différente de l'entier $k$, comprise entre 0 et $d$. Par exemple, l'homme du métier peut initialiser l'entier $k$ avec la valeur de $d$ dans la première étape d'initialisation d'index (étape E2), remplacer la première étape d'incrémentation (étape E8) par une étape de décrémentation qui décrémente $k$ de 1, et déterminer à la première étape de test (étape E6), si l'entier $k$ a atteint la valeur 0.

Le procédé peut être adapté de façon similaire pour chacune des autres boucles.

La figure 3 illustre sous forme de logigramme les étapes principales d'un autre procédé de multiplication sécurisée selon l'invention. Cet autre procédé met en oeuvre ensemble les $d + 1$ itérations :

- d'initialisation d'un polynôme résultat intermédiaire
- d'initialisation de $w + 1$ autres polynômes intermédiaires,
- de mise en oeuvre de $q$ étapes de multiplication polynomiale, et
- de mise à jour du polynôme résultat intermédiaire,

ce qui permet de limiter encore l'espace mémoire consommé.

Comme le procédé décrit en référence à la figure 2, le procédé de la figure 3 vise à mettre en oeuvre une multiplication sécurisée entre un polynôme creux $f$ et un polynôme dense $g$ dans un anneau quotient formé en divisant un anneau des polynômes à une indéterminée $X$ et à coefficients dans un corps fini $K$, par l'idéal engendré par un polynôme $X^n - c$ où $n$ et $c$ sont des entiers naturels non nuls.

Le polynôme dense $g$ est de la forme $\sum_{k=0}^{d} g^{(k)}$ où $d$ est un entier naturel non nul et pour tout $k$ allant de 0 à $d$, $g^{(k)}$ est un polynôme intermédiaire de masquage d'indice $k$ tel que

$$g^{(k)} = \sum_{i=0}^{n-1} \left( g_i^{(k)} \cdot X^i \right)$$

avec pour tout $i$ allant de 0 à $n - 1$, $g_i^{(k)}$ un coefficient de rang $i$ du polynôme intermédiaire de masquage d'indice k.

Le polynôme creux $f$ est de la forme $\sum_{i=0}^{w} \left( f_{s_i} \cdot X^{s_i} \right)$ où pour tout i allant de 0 à w, $s_i$ est un entier compris entre 0 et $n$ - 1 tel que $s_i = \sum_{j=0}^{q} s_i^{(j)} \bmod n$, et $f_{s_i}$ est un coefficient non nul de rang $s_i$ tel que

$$f_{s_i} \cdot X^{s_i} = \prod_{j=0}^{q} \left( f_{s_i}^{(j)} \cdot X^{s_i^{(j)}} \right)$$

, avec w un entier naturel non nul strictement inférieur à $n$, $q$ un entier naturel non nul, et pour tout $j$ allant de 0 à q, $s_i^{(j)}$ une partie additive d'indice $j$ du rang $s_i$ et une partie multiplicative du coefficient $f_{s_i}$.

Le procédé est mis en oeuvre dans un algorithme cryptographique par un dispositif électronique, typiquement le dispositif électronique 2 décrit en référence à la figure 1.

L'algorithme cryptographique peut être un algorithme d'un schéma de chiffrement à clé publique post-quantique, par exemple un algorithme parmi l'algorithme Hamming Quasi-Cyclic, l'algorithme Bit Flipping Key Encapsulation, et l'algorithme Number Theory Research Unit.

Le procédé permet ainsi l'implémentation de ces algorithmes dans un dispositif ayant des ressources mémoires et calculatoires limitées, typiquement dans un élément sécurisé.

Ce procédé est mis en oeuvre dans l'anneau quotient. Ainsi le résultat de chaque opération polynomiale mise en oeuvre sur un, ou plusieurs, polynôme et/ou monôme, est dans l'anneau quotient.

Ce procédé est ici mis en oeuvre par le dispositif électronique 2 du fait de l'exécution des instructions de programme d'ordinateur mémorisées dans le bloc de mémorisation 6 comme indiqué cidessus.

De préférence, $c$ a pour valeur 1 et pour chaque coefficient non nul du polynôme creux $f$, au plus une partie multiplicative du coefficient non nul concerné a une valeur différente de 1, ou c est un entier naturel strictement supérieur à 1 et pour chaque coefficient non nul du polynôme creux $f$, au moins une partie multiplicative du coefficient non nul concerné est générée aléatoirement ou pseudo-aléatoirement.

De préférence, quand c vaut 1 et que les coefficients non nuls du polynôme creux $f$ sont publics, ce qui est le cas quand l'algorithme cryptographique est un algorithme parmi l'algorithme Hamming Quasi-Cyclic, l'algorithme Bit Flipping Key Encapsulation, et l'algorithme Number Theory Research Unit, pour chaque coefficient non nul du polynôme creux $f$, au plus une partie multiplicative du coefficient non nul concerné a une valeur différente de 1

Le procédé permet ainsi de limiter encore les temps de calcul.

Quand $c$ est en entier naturel strictement supérieur à 1, il est préférable que les coefficients non nuls du polynôme creux $f$ ne soient pas publics pour ne pas obtenir d'information sur la non uniformité des masquages additifs. Dans ce cas, il est nécessaire de masquer chaque coefficient non nul du polynôme creux, et ainsi pour chaque coefficient non nul du polynôme creux, au moins une partie multiplicative du coefficient non nul concerné est générée aléatoirement ou pseudo-aléatoirement. Selon une première étape d'initialisation d'index (étape E2), le processeur 4 initialise un entier $k$ à la valeur 0.

Le procédé comprend alors une étape d'initialisation d'un polynôme résultat intermédiaire (étape E4) identique à celle décrite en référence à la figure 2.

Le procédé comprend alors une étape d'initialisation de $w + 1$ autres polynômes intermédiaires (étape E12) identique à celle décrite en référence à la figure 2, pendant laquelle le processeur 4 initialise $w + 1$ autres polynômes intermédiaires ayant des doubles indices respectifs allant de $k, 0$ à $k, w$

Le procédé comprend alors une troisième étape d'initialisation d'index (étape E18) identique à celle décrite en référence à la figure 2.

Le procédé comprend alors une étape de multiplication polynomiale (étape E22) d'indice $j$ identique à celle décrite en référence à la figure 2.

Le processeur 4 détermine ensuite, à une troisième étape de test (étape E30), si l'entier $j$ a atteint la valeur $q$.

Dans la négative, l'entier $j$ est incrémenté de 1 dans une première autre étape d'incrémentation (étape E50) et le procédé boucle à l'étape de multiplication polynomiale (étape E22) pour effectuer un tour suivant.

Ainsi le procédé met en oeuvre $q$ étapes de multiplication polynomiale (étape E22) ayant des indices respectifs allant de 1 à $q$, chaque étape de multiplication polynomiale effectuant un calcul défini comme suit : pour tout $i$ allant de 0 à $w$,

$$u^{(k,i)} = u^{(k,i)} \cdot f_{s_i}^{(j)} \cdot X^{s_i^{(j)}},\, j$$

ayant pour valeur l'indice de l'étape concernée.

Dans l'affirmative à la troisième étape de test (étape E30), le procédé poursuit avec une étape de mise à jour du polynôme résultat intermédiaire (étape E34) d'indice $k$ pendant laquelle le processeur 4 met à jour le polynôme résultat intermédiaire d'indice $k$ en ajoutant audit polynôme résultat intermédiaire d'indice $k$, les $w + 1$ autres polynômes intermédiaires ayant des doubles indices respectifs allant de $k, 0$ à $k, w$.

Autrement dit, le processeur 4 effectue le calcul suivant :

$$t^{(k)} = \sum_{i=0}^{w} u^{(k,i)}.$$

L'étape de mise à jour du polynôme résultat intermédiaire d'indice $k$ est typiquement mise en oeuvre par le module de mise à jour du polynôme résultat intermédiaire d'indice $k$ du dispositif électronique 2.

Le processeur 4 détermine ensuite, à une cinquième étape de test (étape E36), si l'entier $k$ a atteint la valeur $d$.

Dans la négative, l'entier $k$ est incrémenté de 1 dans une deuxième autre étape d'incrémentation (étape E52) et le procédé boucle à l'étape d'initialisation d'un polynôme résultat intermédiaire (étape E4) pour effectuer un tour suivant.

Au cours du procédé, l'étape d'initialisation d'un polynôme résultat intermédiaire (étape E4) est ainsi exécutée pour tout pour tout $k$ allant de 0 à $d$. Le procédé initialise donc $d + 1$ polynômes résultat intermédiaire $t^{(0)}, ..., t^{(d)}$. Chaque polynôme résultat est un polynôme de l'anneau quotient $K[X]/\langle X^n - c \rangle$.

Ainsi, quand l'étape d'initialisation d'un polynôme résultat intermédiaire (étape E4) est selon le premier exemple d'implémentation, pour tout $k$ allant de 0 à $d$, l'initialisation du polynôme résultat intermédiaire d'indice k comprend l'initialisation de tous les coefficients dudit polynôme résultat intermédiaire d'indice k tel que, pour tout $i$ allant de 0 à $n$ - 1, $\sum_{k=0}^{d} t_i^{(k)} = 0$.

Quand l'étape d'initialisation d'un polynôme résultat intermédiaire (étape E4) est selon le deuxième exemple d'implémentation, pour tout $k$ allant de 0 à $d$, l'initialisation (étape E4) du polynôme résultat intermédiaire d'indice $k$ comprend l'initialisation de tous les coefficients dudit polynôme résultat intermédiaire d'indice $k$, et le calcul d'un polynôme de référence $r$ comme suit : $r$

$= \sum_{k=0}^{d} t^{(k)}$, avec pour tout k allant de 0 à $d$, $t^{(k)}$ le polynôme résultat intermédiaire d'indice $k$ tel qu'initialisé pendant l'étape d'initialisation du polynôme résultat intermédiaire d'indice $k$.

Au cours du procédé, l'étape d'initialisation de $w + 1$ autres polynômes intermédiaires (étape E12) est aussi exécutée pour tout pour tout $k$ allant de 0 à $d$. Le procédé initialise ainsi $(d + 1) \times (w + 1)$ autres polynômes intermédiaires $u^{(0,0)}, ..., u^{(0,w)}, u^{(1,0)}, ..., u^{(1,w)}, ..., u^{(d,0)}, ..., u^{(d,w)}$. Chaque autre polynôme intermédiaire est un polynôme de l'anneau quotient $K[X]/\langle X^n - c \rangle$.

En outre, chaque étape de multiplication polynomiale (étape E22) d'indice $j$, $j$ allant de 1 à q, est exécutée pour tout $k$ allant de 0 à $d$. Avec les étapes de multiplication polynomiale (étape E22) d'indice $j$, le procédé calcule ainsi pour tout $i$ allant de 0 à $w$ et pour tout

$k$ allant de 0 à $d$ : $u^{(k,i)} = u^{(k,i)} \cdot f_{s_i}^{(j)} \cdot X^{s_i^{(j)}}$.

Enfin, le procédé met en oeuvre $d + 1$ étapes de mise à jour du polynôme résultat intermédiaire (étape E34) et effectue les calculs suivants :

$$t^{(k)} = \sum_{i=0}^{w} u^{(k,i)},\text{ pour tout } k \text{ allant de 0 à } d.$$

Dans l'affirmative à la cinquième étape de test (étape E36), le procédé poursuit avec une étape (étape E40) de calcul d'un polynôme résultat final $t$ identique à celle décrite en référence à la figure 2.

Le procédé utilise un masquage additif des rangs $s_i$ du polynôme creux $f$. Ce masquage est rendu possible par l'utilisation de l'anneau quotient $K[X]/\langle X^n - c\rangle$.

Le procédé ne met en oeuvre que $(d + 1) \times (q + 1) \times (w + 1) \times n$ multiplications dans le corps fini $K$.

Le procédé est ainsi sécurisé et permet de limiter les temps de calcul et l'espace mémoire consommé.

L'homme du métier comprendra que l'étape de calcul d'un polynôme résultat final $t$ peut- être omise, par exemple quand le résultat de la multiplication du polynôme creux $f$ par le polynôme dense $g$ doit être utilisé dans au moins un autre calcul. En effet, dans ce cas il peut être avantageux d'utiliser les $d + 1$ polynômes résultat intermédiaire pour effectuer l'autre calcul. Les $d + 1$ polynômes résultat intermédiaire constituent des parties additives du résultat de la multiplication du polynôme creux $f$ par le polynôme dense $g$, c'est-à-dire une forme masquée dudit résultat de la multiplication du polynôme creux $f$ par le polynôme dense $g$. L'utilisation du résultat du procédé de multiplication sécurisée entre le polynôme creux $f$ et le polynôme dense $g$, pour l'autre calcul, est ainsi sécurisée.

De façon avantageuse, selon un troisième exemple d'implémentation, la première itération de l'étape d'initialisation d'un polynôme résultat intermédiaire (étape E4) peut initialiser tous les coefficients du polynôme résultat intermédiaire d'indice $k$ avec la valeur 0, $k$ ayant pour valeur 0, puis chaque autre itération de l'étape d'initialisation d'un polynôme résultat intermédiaire (étape E4) peut initialiser le polynôme résultat intermédiaire d'indice $k$ comme suit : $t^{(k)} = t^{(k-1)}$, $k$ ayant la valeur déterminée par la mise en oeuvre de la deuxième autre étape d'incrémentation (étape E52) qui précède l'itération concernée de l'étape d'initialisation d'un polynôme résultat intermédiaire. Dans ce cas, l'étape (étape E40) de calcul d'un polynôme résultat final $t$ peut être omise, t(d) ayant pour valeur $f \cdot g$.

Quand l'étape (étape E40) de calcul d'un polynôme résultat final $t$ est omise, dans l'affirmative à la cinquième étape de test (étape E36), le procédé prend fin.

Une première boucle est constituée de l'étape d'initialisation d'un polynôme résultat intermédiaire (étape E4), de l'étape d'initialisation de $w + 1$ autres polynômes intermédiaires (étape E12), de la troisième étape d'initialisation d'index (étape E18), d'une deuxième boucle, de l'étape de mise à jour du polynôme résultat intermédiaire (étape E34), de la cinquième étape de test (étape E36) et de la deuxième autre étape d'incrémentation (étape E52).

La deuxième boucle est constituée, de l'étape de multiplication polynomiale (étape E22), de la troisième étape de test (étape E30) et de la première autre étape d'incrémentation (étape E50).

Pour chaque boucle, le procédé de multiplication sécurisée décrit en référence à la figure 3, exécute les tours de la boucle concernée avec un index qui s'incrémente à chaque tour de ladite boucle. L'homme du métier comprendra que l'index d'une boucle peut être géré différemment tant que toutes les valeurs de l'index sont parcourues en exécutant les tours de ladite boucle.

Typiquement, concernant la deuxième boucle le procédé peut être adapté pour faire les $q$ itérations de l'étape de multiplication polynomiale (étape E22) dans un ordre différent, chaque itération utilisant une valeur différente de l'entier $j$, comprise entre 1 et $q$. Par exemple, l'homme du métier peut initialiser l'entier $j$ avec la valeur de $q$ dans la troisième étape d'initialisation d'index (étape E18), remplacer la première autre étape d'incrémentation (étape E50) par une autre étape de décrémentation qui décrémente $j$ de 1, et déterminer à la troisième étape de test (étape E30), si l'entier $j$ a atteint la valeur 1.

Le procédé peut être adapté de façon similaire pour la première boucle.

## Revendications

1. Procédé de multiplication sécurisée entre un polynôme creux $f$ et un polynôme dense $g$ dans un anneau quotient formé en divisant un anneau des polynômes à une indéterminée $X$ et à coefficients dans un corps fini $K$, par l'idéal engendré par un polynôme $X^n - c$ où $n$ et $c$ sont des entiers naturels non nuls,

   - le procédé étant mis en oeuvre dans un algorithme cryptographique par un dispositif électronique (2),
   - le polynôme dense $g$ étant de la forme $\sum_{k=0}^{d} g^{(k)}$ où $d$ est un entier naturel non nul et pour tout $k$ allant de 0 à $d$, $g^{(k)}$ est un polynôme intermédiaire de masquage d'indice $k$ tel que $g^{(k)} = \sum_{i=0}^{n-1}\left(g_i^{(k)} \cdot X^i\right)$ avec pour tout $i$ allant de 0 à $n$ - 1, $g_i^{(k)}$ un coefficient de rang $i$ du polynôme intermédiaire de masquage d'indice $k$,
   - le procédé étant **caractérisé en ce que** le polynôme creux $f$ est de la forme $\sum_{i=0}^{w}\left(f_{s_i} \cdot X^{s_i}\right)$ où pour tout i allant de 0 à $w$, $s_i$ est entier compris entre 0 et $n$ - 1 tel que $s_i = \sum_{j=0}^{q} s_i^{(j)} \bmod n$, et $f_{s_i}$ est un coefficient non nul de rang $s_i$ tel que $f_{s_i} \cdot X^{s_i} = \prod_{j=0}^{q}\left(f_{s_i}^{(j)} \cdot X^{s_i^{(j)}}\right)$, avec $w$ un entier naturel non nul strictement inférieur à $n$, $q$ un entier naturel non nul, et pour tout $j$

allant de 0 à q, $s_i^{(j)}$ une partie additive d'indice

$j$ du rang $s_j$ et $f_{s_i}^{(j)}$ une partie multiplicative du coefficient $f_{s_{i'}}$

- et **en ce que** le procédé comprend pour tout $k$ allant de 0 à $d$:

    a. l'initialisation (E4) d'un polynôme résultat intermédiaire d'indice k $t^{(k)}$ tel que

$$t^{(k)} = \sum_{i=0}^{n-1}\left(t_i^{(k)} \cdot X^i\right)$$

avec pour tout $i$ allant de 0 à $n$ - 1, $t_i^{(k)}$ un coefficient de rang $i$ du polynôme résultat intermédiaire d'indice $k$ ;

    b. l'initialisation (E12) de $w$ + 1 autres polynômes intermédiaires ayant des doubles indices respectifs allant de $k$, 0 à $k$, $w$ tel que pour tout $i$ allant de 0 à $w$,

$$u^{(k,i)} = g^{(k)} \cdot f_{s_i}^{(0)} \cdot X^{s_i^{(0)}}$$

, avec $u^{(k,i)}$ l'autre polynôme intermédiaire ayant pour double indice $k$, $i$;

    c. la mise en oeuvre de $q$ étapes (E22) de multiplication polynomiale ayant des indices respectifs allant de 1 à $q$, chaque étape de multiplication polynomiale effectuant un calcul défini comme suit : pour tout $i$ allant de 0 à $w$, $u^{(k,i)} = u^{(k,i)} \cdot f_{s_i}^{(j)} \cdot X^{s_i^{(j)}}$, $j$ ayant pour valeur l'indice de l'étape concernée ;

    d. la mise à jour (E34) du polynôme résultat intermédiaire d'indice $k$ en ajoutant audit polynôme résultat intermédiaire d'indice $k$, les $w$ + 1 autres polynômes intermédiaires ayant des doubles indices respectifs allant de $k$, 0 à $k$, $w$.

2. Procédé de multiplication sécurisée selon la revendication précédente, le procédé comprenant en outre une étape (E28) de renouvellement entre deux étapes de multiplication polynomiale (E22) ayant des indices différents, chaque étape de renouvellement (E28) renouvelant les autres polynômes intermédiaires tel que pour tout $i$ allant de 0 à $w$, $\sum_{k=0}^{d} u^{(k,i)}$ reste inchangé.

3. Procédé de multiplication sécurisée selon l'une quelconque des revendications précédentes, dans lequel $c$ a pour valeur 1 et pour chaque coefficient non nul du polynôme creux, au plus une partie multiplicative du coefficient non nul concerné a une valeur différente de 1, ou dans lequel c est un entier naturel strictement supérieur à 1 et pour chaque coefficient non nul du polynôme creux, au moins une partie multiplicative du coefficient non nul concerné est générée aléatoirement ou pseudo-aléatoirement.

4. Procédé de multiplication sécurisée selon l'une quelconque des revendications précédentes, dans lequel l'algorithme cryptographique est un algorithme d'un schéma de chiffrement à clé publique post-quantique, par exemple un algorithme parmi l'algorithme Hamming Quasi-Cyclic, l'algorithme Bit Flipping Key Encapsulation, et l'algorithme Number Theory Research Unit.

5. Procédé de multiplication sécurisée selon l'une quelconque des revendications précédentes, dans lequel pour tout k allant de 0 à d, l'initialisation (E4) du polynôme résultat intermédiaire d'indice k comprend l'initialisation de tous les coefficients dudit polynôme résultat intermédiaire d'indice k tel que, pour tout $i$ allant de 0 à $n$ - 1, $\sum_{k=0}^{d} t_i^{(k)} = 0$.

6. Procédé de multiplication sécurisée selon la revendication précédente, le procédé comprenant après la mise en oeuvre des $d$ + 1 étapes (E34) de mise à jour d'un polynôme résultat intermédiaire, une étape (E40) de calcul d'un polynôme résultat final $t$ comme suit : $t = \sum_{k=0}^{d} t^{(k)}$.

7. Procédé de multiplication sécurisée selon l'une quelconque des revendications 1 à 4, dans lequel pour tout $k$ allant de 0 à $d$, l'initialisation (E4) du polynôme résultat intermédiaire d'indice $k$ comprend l'initialisation de tous les coefficients dudit polynôme résultat intermédiaire d'indice $k$, et le calcul d'un polynôme de référence $r$ comme suit : $r = \sum_{k=0}^{d} t^{(k)}$, avec pour tout k allant de 0 à d, $t^{(k)}$ le polynôme résultat intermédiaire d'indice $k$ tel qu'initialisé pendant l'étape d'initialisation du polynôme résultat intermédiaire d'indice k.

8. Procédé de multiplication sécurisée selon la revendication précédente, le procédé comprenant après la mise en oeuvre des $d$ + 1 étapes (E34) de mise à jour d'un polynôme résultat intermédiaire, une étape (E40) de calcul d'un polynôme résultat final $t$ comme suit : $t = \left(\sum_{k=0}^{d} t^{(k)}\right) - r$.

9. Programme d'ordinateur comprenant des instructions exécutables par un processeur et adaptées à mettre en oeuvre un procédé de multiplication sécurisée selon l'une quelconque des revendications précédentes, lorsque ces instructions sont exécutées par le processeur.

**10.** Dispositif électronique (2) de multiplication sécurisée entre un polynôme creux $f$ et un polynôme dense $g$ dans un anneau quotient formé en divisant un anneau des polynômes à une indéterminée $X$ et à coefficients dans un corps fini $K$, par l'idéal engendré par un polynôme $X^n$ - $c$ où $n$ et $c$ sont des entiers naturels non nuls,

- le polynôme dense $g$ étant de la forme $\sum_{k=0}^{d} g^{(k)}$ où $d$ est un entier naturel non nul et pour tout $k$ allant de 0 à $d$, $g^{(k)}$ est un polynôme intermédiaire de masquage d'indice $k$ tel que $g^{(k)} = \sum_{i=0}^{n-1}\left(g_i^{(k)} \cdot X^i\right)$ avec pour tout $i$ allant de 0 à $n$ - 1, $g_i^{(k)}$ un coefficient de rang $i$ du polynôme intermédiaire de masquage d'indice $k$,

- le dispositif électronique étant **caractérisé en ce que** le polynôme creux $f$ est de la forme $\sum_{i=0}^{w}\left(f_{s_i} \cdot X^{s_i}\right)$ où pour tout i allant de 0 à $w$, $s_i$ est un entier compris entre 0 et $n$ - 1 tel que $s_i = \sum_{j=0}^{q} s_i^{(j)} \ mod \ n$, et $f_{s_i}$ est un coefficient non nul de rang $s_i$ tel que $f_{s_i} \cdot X^{s_i} = \prod_{j=0}^{q}\left(f_{s_i}^{(j)} \cdot X^{s_i^{(j)}}\right)$, avec $w$ un entier naturel non nul strictement inférieur à $n$, $q$ un entier naturel non nul, et pour tout $j$ allant de 0 à $q$, $s_i^{(j)}$ une partie additives d'indice $j$ du rang $s_i$ et $f_{s_i}^{(j)}$ une partie multiplicative du coefficient $f_{s_i}$,

- et **en ce que** le dispositif électronique comprend, pour tout $k$ allant de 0 à $d$ :

a. un module d'initialisation d'un polynôme résultat intermédiaire d'indice $k$ $t^{(k)}$ configuré pour initialiser le polynôme résultat intermédiaire d'indice $k$ tel que $t^{(k)} = \sum_{i=0}^{n-1}\left(t_i^{(k)} \cdot X^i\right)$ avec pour tout $i$ allant de 0 à $n$ - 1, $t_i^{(k)}$ un coefficient de rang $i$ du polynôme résultat intermédiaire d'indice $k$ ;

b. un module d'initialisation de $w$ + 1 autres polynômes intermédiaires configuré pour initialiser $w$ + 1 autres polynômes intermédiaires ayant des doubles indices respectifs allant de $k$, 0 à $k$, $w$ tel que pour tout $i$ allant de 0 à $w$, $u^{(k,i)} = g^{(k)} \cdot f_{s_i}^{(0)} \cdot X^{s_i^{(0)}}$, avec $u^{(k,i)}$ l'autre polynôme intermédiaire ayant pour double indice $k$, $i$;

c. un module de multiplication polynomiale configuré pour mettre en oeuvre $q$ étapes de multiplication polynomiale ayant des indices respectifs allant de 1 à $q$, chaque étape de multiplication polynomiale effectuant un calcul défini comme suit : pour tout $i$ allant de 0 à $w$, $u^{(k,i)} = u^{(k,i)} \cdot f_{s_i}^{(j)} \cdot X^{s_i^{(j)}}$, $j$ ayant pour valeur l'indice de l'étape concernée ;

d. un module de mise à jour du polynôme résultat intermédiaire d'indice $k$ configuré pour mettre à jour le polynôme résultat intermédiaire d'indice $k$ en ajoutant audit polynôme résultat intermédiaire d'indice $k$, les $w$ + 1 autres polynômes intermédiaires ayant des doubles indices respectifs allant de $k$, 0 à $k$, $w$.

m

2

10

4

6

8

Figure 1

Figure 2

Figure 3

Europäisches
Patentamt

European
Patent Office

Office européen
des brevets

# RAPPORT DE RECHERCHE EUROPEENNE

Numéro de la demande

EP 24 19 0159

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SCHAMBERGER THOMAS ET AL: "Practical Evaluation of Masking for NTRUEncrypt on ARM Cortex-M4", 16 mars 2019 (2019-03-16), CONSTRUCTIVE SIDE-CHANNEL ANALYSIS AND SECURE DESIGN; [LECTURE NOTES IN COMPUTER SCIENCE; LECT.NOTES COMPUTER], SPRINGER INTERNATIONAL PUBLISHING, CHAM, PAGE(S) 253 - 269, XP047686981, ISSN: 0302-9743 ISBN: 978-3-030-16349-5 [extrait le 2019-03-16] * sections 2 et 5; figures 1,3 * | 1-10 | INV. H04L9/30 H04L9/00 |
| X | WEI-LUN HUANG ET AL: "Correlation Power Analysis on NTRU Prime and Related Countermeasures", IACR, INTERNATIONAL ASSOCIATION FOR CRYPTOLOGIC RESEARCH , vol. 20190131:230857 31 janvier 2019 (2019-01-31), pages 1-19, XP061027563, Extrait de l'Internet: URL:http://eprint.iacr.org/2019/100.pdf [extrait le 2019-01-31] * algorithme 1 and section 4.1 * | 1-3,5-10 | |

DOMAINES TECHNIQUES RECHERCHES (IPC)

H04L

-/--

Le présent rapport a été établi pour toutes les revendications

| Lieu de la recherche | Date d'achèvement de la recherche | Examinateur |
|---|---|---|
| Munich | 20 décembre 2024 | Manet, Pascal |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...............................................................
& : membre de la même famille, document correspondant

EPO FORM 1503 03.82 (P04C02)

Europäisches
Patentamt

European
Patent Office

Office européen
des brevets

## RAPPORT DE RECHERCHE EUROPEENNE

Numéro de la demande

EP 24 19 0159

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | KRAUSZ MARKUS ET AL: "A Holistic Approach Towards Side-Channel Secure Fixed-Weight Polynomial Sampling", 2 mai 2023 (2023-05-02), PUBLIC-KEY CRYPTOGRAPHY - PKC 2023; [LECTURE NOTES IN COMPUTER SCIENCE; LECT.NOTES COMPUTER], SPRINGER NATURE SWITZERLAND, CHAM, PAGE(S) 94 - 124, XP047659421, ISSN: 0302-9743 ISBN: 978-3-031-31370-7 [extrait le 2023-05-02] * sections 2.2 and 5 * ----- | 1-10 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 20 décembre 2024 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2